(19) **Europäisches Patentamt**
**European Patent Office**
**Office européen des brevets**

(11) **EP 3 798 918 B1**

(12) **EUROPEAN PATENT SPECIFICATION**

(45) Date of publication and mention
of the grant of the patent:
**29.10.2025 Bulletin 2025/44**

(51) International Patent Classification (IPC):
*G06N 3/088* (2023.01)     *G06N 3/045* (2023.01)
*G06N 3/047* (2023.01)     *G01S 5/02* (2010.01)
*G06N 3/048* (2023.01)

(21) Application number: **19306204.9**

(22) Date of filing: **26.09.2019**

(52) Cooperative Patent Classification (CPC):
**G01S 5/02522; G01S 5/0278; G06N 3/045;
G06N 3/0455; G06N 3/047; G06N 3/0475;
G06N 3/088; G06N 3/0895; G06N 3/09;**
G06N 3/048

(54) **USING SEMI-SUPERVISED VARIATIONAL AUTOENCODER FOR WI-FI-BASED INDOOR LOCALIZATION**

VERWENDUNG VON HALBÜBERWACHTEM VARIIERENDEM AUTOCODIERER FÜR WI-FI-BASIERTE INNENRAUMLOKALISIERUNG

UTILISATION D'UN AUTO-ENCODEUR VARIATIONNEL SEMI-SUPERVISÉ POUR LA LOCALISATION INTÉRIEURE BASÉE SUR WI-FI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.03.2021 Bulletin 2021/13**

(73) Proprietor: **Naver Corporation
Seongnam-si, Gyeonggi-do 13561 (KR)**

(72) Inventors:
• **CHIDLOVSKII, Boris
38240 Meylan (FR)**
• **ANTSFELD, Leonid
38330 Saint Ismier (FR)**

(74) Representative: **Grünecker Patent- und
Rechtsanwälte
PartG mbB
Leopoldstraße 4
80802 München (DE)**

(56) References cited:
**WO-A1-2018/046412     WO-A1-2019/118644
US-A1- 2017 161 635**

• MOHAMMADI MEHDI ET AL: "Semisupervised Deep Reinforcement Learning in Support of IoT and Smart City Services", IEEE INTERNET OF THINGS JOURNAL, IEEE, USA, vol. 5, no. 2, 1 April 2018 (2018-04-01), pages 624 - 635, XP011680810, DOI: 10.1109/JIOT.2017.2712560
• YOO JAEHYUN ET AL: "Semi-supervised learning for mobile robot localization using wireless signal strengths", 2017 INTERNATIONAL CONFERENCE ON INDOOR POSITIONING AND INDOOR NAVIGATION (IPIN), IEEE, 18 September 2017 (2017-09-18), pages 1 - 8, XP033261513, DOI: 10.1109/IPIN.2017.8115921

## Description

## BACKGROUND

Many applications of electronic devices rely on receiving a current position of the electronic device, which is however not easily available in indoor environments (which may be fully enclosed (e.g., within a building or underground cave) or partially enclosed (e.g., within a car park or tunnel)), where absent line of sight with satellites, positioning via satellite signals such as GPS, Galileo, or GLONASS is not available.

State-of-the-art indoor positioning methods instead rely on signals received from wireless access points. To localize a mobile agent or a device, methods of trilateration can be used if three or more locations of nearby Wi-Fi Access Points are known. However, Wi-Fi access point positions are rarely available and up-to-date because they are often deployed by many different providers. Moreover, since a complex indoor environment often contains obstacles such as walls and doors, and frequently moving objects, the effect of signal multi-path makes trilateration of Wi-Fi signals very difficult.

A method overcoming this problem is employing Wi-Fi fingerprinting for indoor positioning. Wi-Fi fingerprinting relies on a list of signal strengths from various access points received at a position and does not rely on knowing the exact location of the access points themselves. Collecting the list of signal strengths must be done in advance, to obtain a radio map of the building. For the Wi-Fi fingerprinting to work well, the radio map has to be dense and up-to-date. However, generating the radio map is expensive, because for indoor positioning methods of the state of the art the Wi-Fi data has to be labeled with geo-tags, for example, a coordinate, a room identifier or a building number.

A large comparison of these two main approaches to Wi-Fi based indoor localization, trilateration and fingerprinting, was undertaken in Mok and Retscher: "Location determination using Wi-Fi fingerprinting versus Wi-Fi trilateration", Journal of Location Based Services, 1(2):145-157, 2007. The authors conclude that a large amount of geo- labeled Wi-Fi received signal strength (RSS) data is required for the fingerprinting methods to work well, and raise the issue of reducing the data collection and annotation effort.

The principle of applying semi-supervised machine learning, which comprises training with labeled and unlabeled data, is well established in Machine Learning (ML), and several Machine Learning techniques were adopted to reduce the offline Wi-Fi data collection. In semi-supervised machine learning the system is provided with a training set $\{(x_i, y_i), i = 1, ... n\}$ comprising tuples of data points $x_i$ and annotations, also called labels, $y_i$, and is additionally provided with unlabeled data points $x_i$. The goal in semi-supervised learning, like in supervised learning, is to infer the best functional relationship $x \rightarrow y$ minimizing a prediction error. This problem can also be described as finding a mapping function $F: x \rightarrow z$ in a space of a latent variable $z$, which is smaller than the space of the training set. The best predictor can then be defined as a function of $z$ with parameter $\theta$ such that $f_\theta(z) = \text{argmax}_y p(y|z, \theta)$.

Semi-supervised learning can be viewed as supervised learning augmented with information on the distribution of the underlying data set provided by the unlabeled data. Even though unlabeled data cannot be used to explicitly train the predictor with the prediction goal, unlabeled data can improve the prediction of a predicator because it can be assumed that if two data points are close in a high density region, their respective predictions should also be close. Equivalently, if data points are in the same cluster of the distribution of data points, they are likely to be close in the space of annotations, such as having the same class label as annotation.

For example, Pulkkinen, Roos, and Myllymäki: "Semi-supervised learning for WLAN Positioning", In: Artificial Neural Networks and Machine Learning - ICANN 2011 - 21st International Conference on Artificial Neural Networks, Part I, pages 355-263, 2011 propose a semi-supervised learning method that includes first mapping a high-dimensional signal strength data into two-dimensional manifold, using only a small sample of key points with known locations. While experimental results in a relatively small environment showed promising results, the results in an open area proved to be less accurate and were not reported.

Another method for semi-supervised learning is applying a variational autoencoder. Variational autoencoders, VAEs, are a class of stochastic generative models implemented as deep neural networks. VAEs simultaneously train a probabilistic encoder neural network and a decoder neural network. VAEs involve drawing a sample of a latent variable z, from a uniform prior distribution p(z). The space of latent variables is usually of a much smaller dimension that the input and output of the VAEs. The sample z is put through the decoder neural network to reconstruct an original input.

VAEs aim to learn the Bayesian posterior distribution over the latent variable

$$p_\theta^{\text{exact}}(z|x) = \frac{p_\theta(x|z)\,p(z)}{p_\theta(x)},$$

which however is not a tractable expression. VAEs employ variational inference to approximate $p_\theta^{\text{exact}}$ by a parametric distribution, usually Gaussian distributions, whose parameters are learned by an encoder neural network. Intuitively, the problem is to find a latent variable z, which maximizes the likelihood of generating an element $x_i$ of the training set.

Nowicki and Wietrzykowski: *"Low-effort place recognition with Wi-Fi fingerprints using deep learning"* apply a Deep Neural Network with an autoencoder directly on Wi-Fi received signal strength data for floor and building classification. The method was tested on publicly available UJI-IndoorLoc with the reported results being comparable with the state of the art.

Mohammadi Mehdi et al: "Semisupervised Deep Reinforcement Learning in Support of IoT and Smart City Services", IEEE Internet of Things Journal, IEEE, USA, vol. 5, no 2, 1 April 2018, pages 624-635, disclose a semi-supervised deep reinforcement learning model for finding optimal action policies for robot localization. The approach is based on a variational autoencoder as an inference engine. A Markov decision process is formulated to maximize rewards learned by an agent acting in an environment and receiving sensory data. In a use case of indoor localization with a robot, the goal is to optimize a policy for moving the robot closer to a target position based on the three most recent RSSI observations received from iBeacons distributed on a floor of a building.

It is thus the object of the present disclosure to reduce the need for labeled data in training of a classifier for indoor positioning.

This object is solved by the subject matter of the independent claims.

Embodiments are defined by the dependent claims.

The present disclosure proposes a deep learning technique that requires only a small amount of the training data to be labeled to still generate a sufficiently accurate classifier for indoor positioning. The proposed deep learning technique is based on a variational autoencoder (VAE). The proposed deep learning technique allows obtaining reasonably accurate predictors at an annotation ratio of as low as 1-5% of the training dataset.

According to an embodiment, a computer-implemented method of training a predictor for the location of a computing device in an indoor environment is provided. The method is defined by independent claim 1.

According to another embodiment, a further computer-implemented method of training a predictor for locations of a computing device in an indoor environment is provided. The method is defined by independent claim 2.

According to an aspect, outputting the predicted location to the decoder neural networks of the variational autoencoder comprises outputting the predicted location as a categorical latent variable to the decoder neural networks, wherein the variational autoencoder comprises encoder neural networks which encode the signal strength values in a continuous latent variable, and wherein the decoder neural networks decode the categorical latent variable and the continuous latent variable to reconstructed signal strength values.

According to an aspect, minimizing the reconstruction loss and the prediction loss comprises determining gradients of a sum of a first term and a second term with respect to first hidden states of the encoder neural networks, with respect to second hidden states of the decoder neural networks, and with respect to third hidden states of the classification neural network, wherein the first term measures the reconstruction loss for the training data, and the second term measures the prediction loss for the subset of labeled data of the training data.

According to another aspect, the encoder neural networks comprise an encoder neural network for the X coordinate, an encoder neural network for the Y coordinate, and an encoder neural network for the Z coordinate, and the decoder neural networks comprise corresponding decoder networks. Training the autoencoder may comprise training each encoder-decoder pair for a coordinate independent of the encoder-decoder pairs for the other coordinates.

According to an aspect, the outputs of the encoder neural network for the X coordinate, the encoder neural network for the Y coordinate, and the encoder neural network for the Z coordinate are concatenated to form the latent variable.

According to an embodiment, a predictor for locations of a computing device in an indoor environment is provided, the predictor being implemented by one or more computers. The predictor is defined by independent claim 7.

According to another embodiment, a predictor for locations of a computing device in an indoor environment is provided, the predictor being implemented by one or more computers. The predictor is defined by independent claim 8.

According to an aspect, during training of the classification neural network together with the variational autoencoder, the predicted location is a categorical latent variable of the variational autoencoder.

According to an aspect, minimizing the reconstruction loss and the prediction loss comprises determining gradients of a sum of a first term and a second term with respect to first hidden states of encoder neural networks of the variational autoencoder, with respect to second hidden states of the decoder neural networks and with respect to third hidden states of the classification neural network, wherein the first term measures the reconstruction loss, and the second term measures the prediction loss.

According to an aspect, the encoder neural networks comprise an encoder neural network for the X coordinate, an encoder neural network for the Y coordinate, and an encoder neural network for the Z coordinate, and the decoder neural network comprises corresponding decoder networks, wherein each encoder-decoder pair for a coordinate is trained independent of the encoder-decoder pairs for the other coordinates.

According to yet another aspect, the predictor may comprise a projection component configured to apply a weighted neighborhood projection to the absolute coordinate indicated by the multivariate data value of the prediction labels, wherein the weighted neighborhood projection employs a number of nearest neighbor nodes from the subset of labeled nodes. In embodiments, the number of nearest neighbor nodes may be 2.

According to another embodiment, a computer-readable storage medium is provided, the computer-readable storage medium having computer-executable instructions stored thereon, which, when executed by one or more processors perform a method for training a predictor for the location of a computing device in an indoor environment as described above. According to embodiments, the computer-executable instructions may provide a predictor for the location of a computing device in an indoor environment as described in accordance with embodiments described above.

## BRIEF DESCRIPTION OF THE DRAWINGS

Embodiments are shown in the enclosed drawings in which:

> **Figure 1** is a schematic drawing relating to training a predictor for Wi-Fi-based indoor localization in accordance with an embodiment;
> **Figure 2** is a schematic drawing relating to training a predictor for Wi-Fi-based indoor localization in accordance with an embodiment;
> **Figure 3** is a flow diagram of a method of training a predictor for Wi-Fi-based indoor localization in accordance with an embodiment;
> **Figure 4** is a flow diagram of a method of training a predictor for Wi-Fi-based indoor localization according in accordance with another embodiment;
> **Figure 5** illustrates a method of structured regression implemented in embodiments of a predictor for Wi-Fi-based indoor localization;
> **Figure 6A** is an aerial image of the buildings employed for a test of the predictor for Wi-Fi-based indoor localization, **Figure 6B** highlights the buildings in the aerial image, and **Figure 6C** shows a distribution of Wi-Fi access points in the buildings;
> **Figure 7A** shows plots of a location error in dependence on the annotation ratio for indoor Wi-Fi localization methods of the prior art and for embodiments, and **Figure 7B** shows cumulative density functions of a location error for a predictor trained according to an embodiment with various annotation ratios;
> **Figure 8** shows the localization error of predictors according to embodiments in dependence on the annotation ratio and on the availability of access points at test time;
> **Figure 9** shows a t-distributed stochastic neighbor embedding of the reconstruction of the Wi-Fi signals by a variational autoencoder according to embodiments; and
> **Figure 10** illustrates an example architecture in which the disclosed methods may be performed.

## DETAILED DESCRIPTION

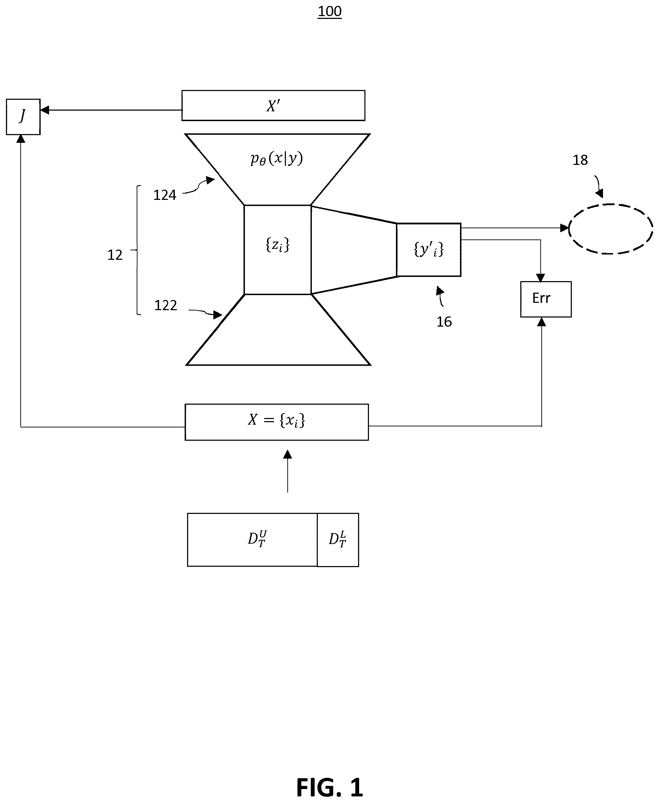

A system for training a deep-learning system for Wi-Fi-based indoor localization with a semi-supervised training scheme that only requires a small fraction of labeled training data will be described in the following. For purposes of explanation, examples and specific details are set forth in order to provide a thorough understanding of the embodiments. Embodiments, as defined by the claims, may include some or all of the features in these examples alone or in combination with the other features described below, and may further include modifications and the equivalence of the features and concepts described herein. The following description will refer to figures 1 to 10, explaining embodiments and technical advantages in detail.

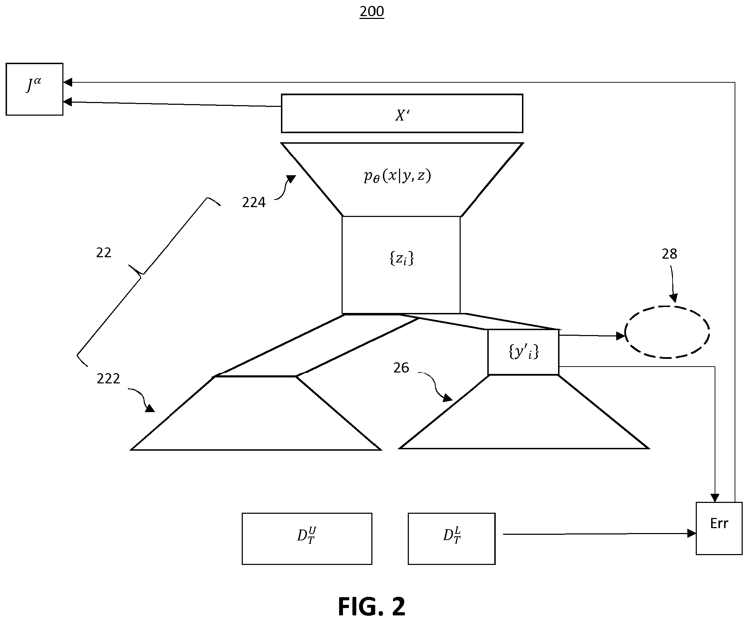

Training of the systems of Fig. 1 and Fig. 2 employs training data which comprises a subset of labeled data

$D_T^L = \{(x_i, y_i) | i = 1, ..., n\}$ , where $n$ is the number of labeled data, vector $x_i \in R^m$ are vectors of signal strength values, each received from one of the Wi-Fi access points $i = 1, ..., m,$ variables $y_i$ are the annotation which can be categorical variables or multivariate variables indicating absolute coordinates. In the former case of $y_i$ being categorical values, the problem solved by embodiments for training a predictor is a classification problem. In the latter case, the $y_i$ being multivariate data indicating absolute coordinates, embodiments relate to a regression setting. The trained data further comprise unlabeled data values $D_T^U$ , which comprise a collection of signal strength values $x_i$. In the following, the distribution of labeled data is represented by $p_l(x,y)$ and the distribution of the unlabeled data is represented by $p_u(x)$. The basic assumption, underlying any semi-supervised training method, is that $p_l(x,y)$ and $p_u(x)$ are samplings from a same distribution in $x$.

Embodiments described in this disclosure, in particular, allow generating an accurate predictor even when $|D_T^L| \ll |D_T^U|$ . The fraction $|D_T^L|/|D_T^U|$ is also referred to as the annotation ratio.

The training methods and systems described in the following are based on variational autoencoders. Examples of variational autoencoders are described in Kingma et. al *"Semi-supervised Learning with Deep Generative Models"*, arXiv:1406.5298v2, incorporated herein by reference.

Embodiments of this disclosure are based on the general concept of employing the training of a variational autoencoder, VAE, to train a classifier for indoor positioning. The basic idea is that the encoder of the VAE acts as a classifier or regressor of the labeled data, when labels are available, and the decoder of the VAE acts as a regularizer. The variational autoencoders of embodiments simultaneously learn an encoding that embeds the encoded input signal strengths in a latent space and a location prediction. The encoding is learned from all training data, while the location prediction is learned from the labeled subset of the training data.

Because a trained VAE optimizes the latent space representation of the input data to allow their reconstruction, the classification task solved by the embodiments, involving determining the location giving rise to the input data, can be learned from fewer labeled data points.

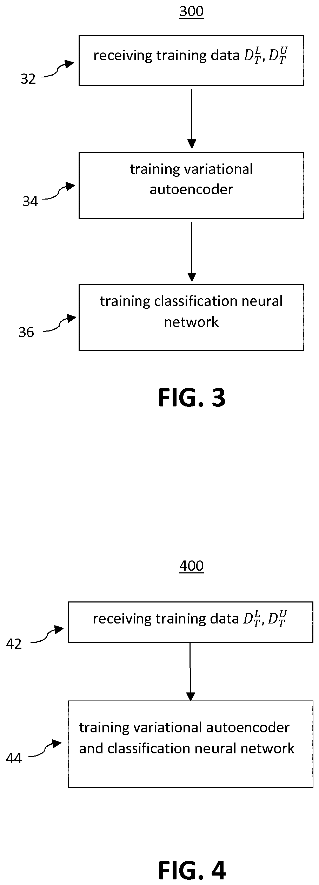

Figure 1 relates to a first embodiment of a system 100 for training a predictor for position of a computing device in an indoor environment. Figure 3 shows a flow diagram of a method for training a predictor for position of a computing device in an indoor environment employing the system of the first embodiment.

System 100 may be implemented by one or more computers. System 100 comprises variational autoencoder 12, which comprises encoder neural network 122 and decoder neural network 124.

For training of the predictor, system 100 is provided with training data comprising $D_T^U$ and $D_T^L$. The set of signal strength values $X = \{x_i\}$, which collects all signal strength data from $D_T^U$ and $D_T^L$ is provided to encoder neural network 122. Encoder neural network 122 encodes each $x_i \in X$ in a latent variable distribution in $z$. Encoder neural network 122 may determine parameters $\mu_\varphi(x_i)$, $\sigma_\varphi(x_i)$ of the distribution of the latent variable z. Decoder neural networks 124 employ samples $z_i$ from the latent variable distribution in $z$ to produce reconstructed signal strength values $x'_i \in X'$.

System 100 further comprises classification neural network 16 that employs the sample $z_i$ from the latent variable distribution to generate a location prediction $y'_i$. In embodiments, the labels $y_i$ of the training data can be a categorical variable such as building numbers, room identifiers or floor levels, and the predicted location is a corresponding categorical value. Alternatively, the labels of the training data may be multivariate data indicating a 3D coordinate giving the latitude and longitude coordinates of a point together with the elevation, and the predicted location is a corresponding multivariate data value.

In more detail, Figure 1 illustrates a first embodiment that comprises a latent feature discriminative model. The first embodiment is based on the generative model according to

$$p(z) = \mathcal{N}(z; 0, I); \quad p_\theta(x|y, z) = f(x; y, \theta) \quad (1)$$

where p(z) is a Gaussian distribution with mean 0 and identity matrix *I* as variance. Function *f(x; y, $\theta$)* is a non-linear likelihood function with generative parameter $\theta$. Function *f* may be a Gaussian distribution whose probabilities are formed by decoder neural networks 122, whereby generative parameter $\theta$ corresponds to the hidden states of decoder neural networks 122.

Distribution *p(z)* is the prior distribution of the latent variable *z*. Because the exact posterior distribution is intractable, variational autoencoder 12 employs a parametric approximation for the posterior distribution. Variational autoencoder 12 is trained to minimize the difference between the parametric approximation and the exact posterior distribution, as explained below. According to the model applied for variational autoencoder 12, the posterior distribution of latent variable z is approximated as a parametric Gaussian distribution,

$$q_\varphi(z|x) = \mathcal{N}\left(z|\mu_\varphi(x), \mathrm{diag}(\sigma^2{}_\varphi(x))\right) \quad (2)$$

whose parameters $\mu_\varphi(x)$ and $\sigma^2{}_\varphi(x)$ are generated by encoder neural networks 122. Eq. (2) defines the latent variable distribution of latent variable *z*. Parameters $\varphi$ are variational parameters which correspond to hidden states of the encoder neural networks 122. Eq. (2) defines the inference model of the autoencoder.

Variational autoencoder 12 is trained by adjusting hidden states $\varphi$ and $\theta$ to minimize the loss

$$J = \sum_{x \sim p_u(x)} E_{q_{\varphi(z|x)}}\big[KL\big[q_\varphi(z|x)||p_\theta(z)\big] - \log p_\theta(z|x)\big] \quad (3)$$

wherein KL is the Kullback-Leibler divergence between the posterior distribution of latent variable *z*, $q_\varphi(z|x)$ and the prior

distribution $p_\theta(z)$.

Under training, classification neural network 16 is configured to receive a sample $z_i$ from the latent variable distribution of latent variable z inferred from the output of encoder neural network 122, wherein the output of encoder neural network 122 encodes an $x_i \in D_T^L$. Classification neural network 16 generates a predicted label $y'_i$ from the sample $z_i$. Classification neural network 16 can then be trained to minimize a difference between $y'_i$ and label $y_i$. In this manner, the approximate posterior $q_p(z|x)$ as produced by encoder neural network 122 is used as a feature extractor for the labeled data $D_T^L$ to train classification neural network 16.

Accordingly, a method 300 for training a predictor according to Fig. 1 for the location of a computing device in an indoor environment comprises receiving 302 training data comprising labeled data $D_T^L$ and unlabeled data $D_T^U$. Obtaining the training data may comprise obtaining unlabeled data from crowd-sourcing or a by employing a browsing robot.

Training 32 the autoencoder comprising encoder neural networks 122 and decoder neural networks 124, comprises minimizing, for example, by stochastic gradient descent, the loss J calculated between signal strength values $x_i$ and reconstructed signal strength values $x_i'$. Minimizing the loss comprises adjusting generative parameters $\theta$ and variational parameters $\varphi$.

Method 300 further comprises training 34 classification neural network 16 to minimize a prediction error (Err) on the labeled data $D_T^L$. Because classifier 16 employs the encoder representation of the input X according to the latent variable distribution of latent variable *z*, instead of the input X itself, classifier 16 can achieve a high accuracy even when $|D_T^L| \ll |D_T^U|$, because separability of the data points is improved in the latent space of z.

After training of the system 100, classification neural network 16 can be employed together with encoder neural network 122 as a predictor for the location of an electronic device. In an embodiment, signal strength values $\tilde{x}_i$ are received by a mobile electronic device, and therefrom provided to the predictor. Trained encoder neural network 122 of the predictor receives $\tilde{x}_i$ and generates parameters $\mu_\varphi(\tilde{x}_i)$ and $\sigma_\varphi(\tilde{x}_i)$ employing optimized hidden parameters $\varphi$. A sample $z_i$ is provided to trained classification neural network 16 which produces a prediction label $y'_i$ as output of the predictor.

Figure 2 shows a schematic drawing for a system 200 for training a predictor for indoor localization according to a second embodiment. Figure 4 shows a flow diagram of a method for training a predictor for position of a computing device in an indoor environment employing the system of the second embodiment. Similar to the embodiment explained with reference to Figs. 1 and 3, the system according to Fig. 2 employs training data which comprises a subset of labeled data $D_T^L$ and a subset of unlabeled data $D_T^U$.

System 200 comprises variational autoencoder 22 with encoder neural network 222 and decoder neural network 224. Encoder neural network 222 receives signal strength values $x_i$, and, together with classification neural network 26, determines parameters $\mu_\varphi$, $\sigma_\varphi$ of a latent variable distribution of latent variable z. From a sample $z_i$ of the latent variable distribution of latent variable z, decoder neural network 224 reconstructs $x_i'' \in X''$.

Classification neural network 26 receives signal strength values $x_i \in X$ of the training data as input and infers parameters of a latent variable distribution of latent variable y. A sample $y'_i$ is drawn from the latent variable distribution of latent variable y and is provided to decoder neural networks 224 of the variational autoencoder.

When training the system 200 of Fig. 2 employing for the unlabeled subset $D_T^U$, variable y is treated as a hidden variable of the variational autoencoder, whereas when training with $D_T^L$, variable y is an input variable.

According to the embodiment of Fig. 2, training of the predictor is based on an autoencoder of a generative supervised modes. Predictions are generated using a latent class variable y in addition to the latent continuous variable z. The generative model is

$$\mathrm{p(z)} = \mathcal{N}(z|0, I); \; p_\theta(x|y, z) = f(x; y, z, \theta), \quad (5)$$

by which states *x* in the space of original input, i.e. wireless strength signals *x* are reconstructed from latent continuous variable z and latent class variable *y*. Parameters $\theta$ are hidden states of the generative model, and function *f* is a nonlinear likelihood function. According to embodiments, function *f* is implemented by decoder neural networks 226 having hidden states $\theta$.

The prior distribution of labels y according to the embodiment of Fig. 2 is assumed as

$$p(y) = \mathrm{Cat}(y|\pi),$$

where Cat is the multinomial distribution with a vector of probabilities $\pi$ whose elements sum up to 1. $\pi$ is the set of classes which is known in advance and may be determined in dependence on the task. Accordingly, the labels y may be sampled from the set of classes $\pi$.

Similar to the embodiment described with reference to Fig.1, the embodiment of Fig. 2 employs a parametric approximation to the exact posterior distribution. The parametric approximation in z is

$$q_\varphi(z|y,x) = \mathcal{N}\left(z|\mu_\varphi(y,x), \mathrm{diag}(\sigma^2{}_\varphi(x))\right). \quad (6)$$

Eq. (6) defines the latent variable distribution of latent variable z, and defines the inference model of the autoencoder. According to the embodiment of Fig. 2, parameter $\sigma^2{}_\varphi(x)$ is generated by encoder neural network 222, while parameter $\mu_\varphi(y,x)$ is jointly estimated by encoder neural network 222 and classification neural network 26.

Classification neural network 26 produces probabilities $\pi_\varphi(x)$ that are parameters of the latent variable distribution of latent variable y, according to

$$q_\varphi(y|x) = \mathrm{Cat}(y|\pi_\varphi(x)). \quad (7)$$

Eq. (7) defines the latent variable distribution of latent variable y. Eq. (7) can be viewed as defining a discriminative classifier. For compactness of notation, the hidden states of classification neural network 26 are assumed as included in $\varphi$. Under the training as described below, the training according to Fig. 2 allows obtaining the optimal classifier under the approximations used.

Accordingly, during training of the system according to Fig. 2, $\mu_\varphi(y,x)$ of Eq. (6) is estimated from labeled data by classification neural network 26 and from unlabeled data by encoder neural network 222.

Training according to the embodiment of Fig. 2 comprises evaluating

$$J = \sum_{(x,y)\sim p_l(x,y)} L(x,y) + \sum_{x\sim p_u(x)} U(x), \quad (8)$$

where the first term and the second term right-hand side arise from a lower bound for the likelihood that the autoencoder model reproduces the training data. The first term on the right-hand side of (8) employs the distribution $p_l(x,y)$ of the labeled data to evaluate

$$L(x,y) = E_{q_\varphi(z|x,y)}\left[-\log p_\theta(x|y,z) - \log p_\theta(y) - \log p_\theta(z) + \log q_\varphi(z|x,y)\right], \quad (9)$$

where $p_\theta(z)$ and $p_\theta(y)$ may correspond to parameter $p(z)$ from Eq. (5) and $p(y) = \mathrm{Cat}(y|\pi)$, respectively, and depend on the parameters $\theta$. Evaluation of expression 9 for the labeled data comprises feeding the labeled data $D_T^L$ to autoencoder 22 and classification neural network 26, whereby variable y is treated as an input variable.

The second term on the right-hand side of Eq. (8) employs the distribution $p_\mu(x)$ of the unlabeled data $D_T^U$ to evaluate

$$U(x) = E_{q_\varphi(y,z|x)}\left[-\log p_\theta(x|y,z) - \log p_\theta(y) - \log p_\theta(z) + \log q_\varphi(y,z|x)\right], \quad (10)$$

where $q_\varphi(y,z|x)$ is a posterior distribution which may be learned during the training phase with the help of the deep learning network. It may start as a random one and may converge to a final one by being re-estimated during training. Evaluation of expression 10 for the unlabeled data comprises feeding the unlabeled data $D_T^U$ to autoencoder 22 and classification neural network 26, whereby variable y is treated as a latent variable.

The encoder neural network 222, decoder neural network 224, and classification neural network 26 are trained to minimize

$$J^\alpha = J + \alpha E_{p_l(x,y)}\mathrm{Err}\left[q_\varphi(y|x)\right] \quad (11),$$

where $J$ is defined according to Eq. (8) and $\mathrm{Err}[q_\varphi(y|x)]$ is a prediction loss on the labeled data. In Eq. (11), the value $\alpha$ reflects a trade-off between the contributions of the generative model and the contributions of the discriminative model in the learning process.

Hence, training the predictor according to the embodiment of Fig. 2 is based on minimizing a sum of a first term and a second term, the first term measuring a reconstruction loss for the training data, and the second term measuring a prediction loss for the labeled subset of the training data.

In an embodiment, labels y are categorical values, e.g. room numbers. In this case the loss on the labeled data $X$ is the classification loss

$$E_{p_l(x,y)}\text{Err}\big[q_\varphi(y|x)\big] = E_{p_l(x,y)}\big[-\log q_\varphi(y|x)\big]$$

In another embodiment, labels y are multi-varied data on the location coordinates such that labels y indicate location coordinate. In this case the classification loss of equation 9 is a regression loss

$$E_{p_l(x,y)}\text{Err}\big[q_\varphi(y|x)\big] = E_{p_l(x,y)}\big|y - q_\varphi(y|x)\big|^2$$

Accordingly, a method 400 for training a predictor according to Fig. 2 for the location of a computing device in an indoor environment comprises receiving 42 training data comprising labeled data $D_T^L$ and labeled data $D_T^U$. The training data may have been obtained by augmenting a subset of labeled data with unlabeled data from crowd-sourcing or a by employing a browsing robot.

Method 400 further comprises training 44 the variational autoencoder 22 and the classification neural network 26. Training the variational autoencoder 22 and the classification neural network 26 comprises repeatedly evaluating $J^\alpha$ by feeding autoencoder 22 with signal strength values $x_i$ from both $D_T^L$ and $D_T^U$, and feeding classification neural network 26 with signal strength values $x_i$ and labels from $D_T^L$ and adjusting generative parameters $\theta$ of decoder neural network 224 and variational parameters $\varphi$ encoder neural network 222 and classification neural network 26, e.g. by stochastic gradient descent.

After encoder neural network 222, decoder network 224, and classification neural network 26 have been trained as explained above, classification neural network 26 can be employed independent of encoder neural network 222 and decoder neural network 226. Classification neural network 26 can be provided with signal strength values $\tilde{x}_i$ received by a device in the indoor environment, produces $\pi_\varphi(\tilde{x}_i)$ employing the values of the hidden states $\varphi$ of classification neural network 26 that have resulted from the training as described above. From the distribution $q_\varphi(y|x)$, a predicted location y' can be generated as the prediction for the location of the device.

Embodiments optionally employ methods of structural regression to constrain the restrictions to a feasible space. Conventional regression methods often ignore the structure of the output variables and therefore face the problem that predictions can fall outside the feasibility space which a priori limits the prediction space, i.e., in the present case, an indoor building space.

Predictions y' that indicate location coordinates, as generated by classification neural networks 16, 26, respectively, are provided to projection components 18, 28, respectively, that correct the prediction y to lie within the feasible space. In embodiments, the correction is based on weighted nearest neighbor projection which considers the $N_r$ neighbors from the labeled subset $D_T^L$ of the training data that are nearest to the location predicted by the encoder. The projection is given by the weighted sum of the locations of the $N_r$ nearest neighbor nodes weighted by an inverse of the distances between the predicted location and the corresponding neighbor. This projection corresponds to a projection in the convex hull of the $N_r$ nearest neighbour nodes, and works well when the closest neighbors are topologically close to each other instead of e.g. belonging to different buildings. If the neighboring nodes are distant, for example, located in different buildings, the structured projection can increase the error. The risk of this error can be minimized by choosing rather small values of $N_r$. According to experimental results, $N_r=2$ gives the most accurate results.

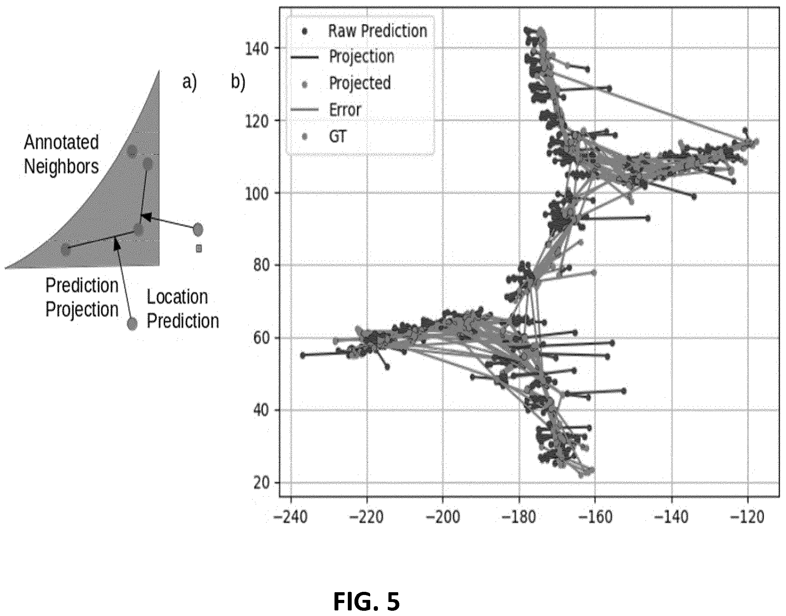

Fig. 5 shows an example of the structured projection applied to the raw predictions generated according to an embodiment. Location predictions of the classification neural networks 26, 26 (indicated as "raw prediction" in the legend) are projected to an interpolation between $N_r = 2$ closest labeled neighbors to obtain a projected location (indicated as "projected"). Fig. 5 compares the projected location with the ground truth (indicated as "GT"). The illustration of Fig. 5 shows that the projection improves localization error in all but a few cases.

According to embodiments, encoder neural networks 124, 224, decoder neural networks 126, 226, and classification neural networks 16, 26 are all implemented as artificial neural networks with three fully connected layers with ReLU activation, and having layer sizes of 512, 256 and z=128. In embodiments, the classification/regression loss in Eq. (11) is weighted with $\alpha = 1$. In embodiments, the network is trained using stochastic gradient descent, for example by employing an Adam optimizer with a learning rate of 0.01, batch size of 64 with batch normalizations, and stopping criterion of the learning at 20,000 iterations. Dropout with probability of 0.5 is applied in all layers of the neural networks. The localization error on the test set is used as the evaluation metric.

According to an embodiment, encoder neural networks 122, 222 comprise separate encoder neural networks for X, Y and Z coordinates and the decoder neural networks 124, 224 comprise corresponding decoders for X, Y and Z. The latent variable z may comprise a concatenation of encoder outputs of the three encoders. According to this embodiment, training of the predictor according to Figs. 1 and 3, or Figs. 2 and 4 may comprise training each encoder-decoder pairs of the X, Y and Z coordinates independent of the other encoder-decoder pairs. This embodiment thereby allows to decorrelate the processing of the different coordinates.

In other embodiments, encoder neural networks 122, 222 comprise separate encoder neural networks for X and Y, and the decoder neural networks 124, 224 correspondingly comprise decoders for X and Y. In this embodiment, training of the predictor according to Figs. 1 and 3, or Figs. 2 and 4 may comprise training the encoder-decoder pair for X independent of the encoder-decoder pair for Y. Latent variable z may in this embodiment comprise a concatenation of encoder outputs of the two encoders.

According to further embodiments, training according to the embodiments of Figures 1 and 2 may further comprise training a building classifier with training data that also comprise a building label. According to these embodiments, classification neural networks are trained for specific buildings. The classification predicted by building classifier is used to select a classification neural network specifically trained for this building. This embodiment allows obtaining classification neural networks that are more precise in the location prediction for a specific building.

## EXPERIMENTAL EVALUATION

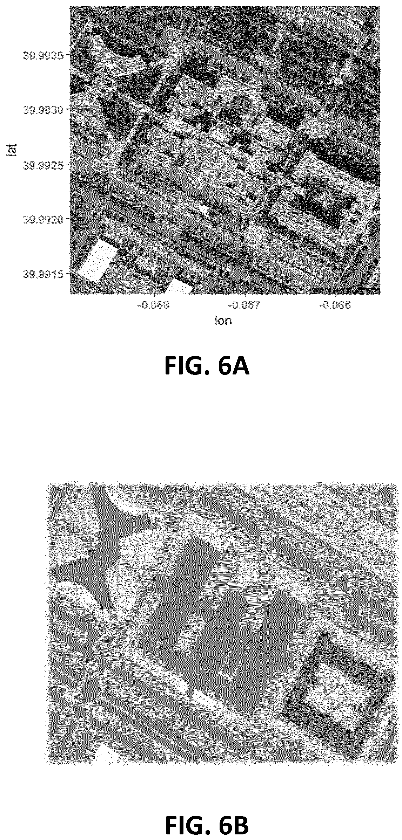

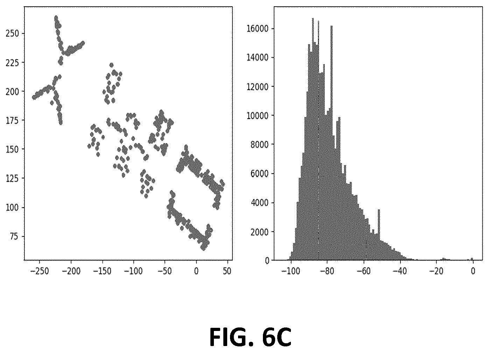

Fig. 6 shows the setting of tests performed to evaluate the predictor of indoor locations trained according to the embodiments described above. Fig. 6 relates to the UJI-IndoorLoc data set that covers a surface of 108,703 $m^2$ in three buildings of the Universitat Jaume I, Campus Castelló, Spain. Fig. 6A reproduces an aerial view of the three buildings and Fig. 6B highlights the area of the three buildings. The left panel of Fig. 6C shows how 933 access points are distributed over the three UJI campus buildings, and Fig. 6C right panel plots a histogram of received signal strength values in the data set. In total, the data set comprises 21,049 sample points, of which 19,938 points are obtained for training and 1,111 are obtained for testing. Testing samples were taken 4 months after the training samples to ensure dataset independence. Data were collected by 20 users with 25 different mobile device models.

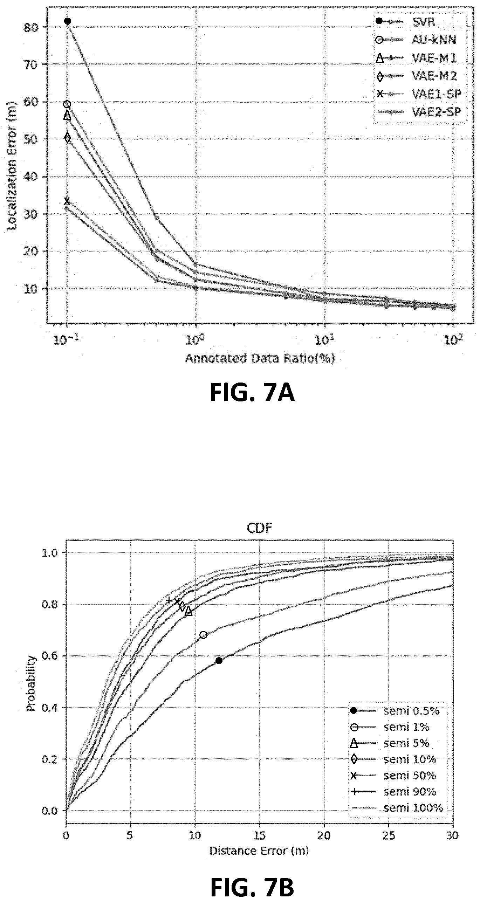

Fig. 7 shows results on the localization error of the systems described in this disclosure for the indoor environment described with reference to Fig. 6. The localization error is the Euclidean distance between the predicted and the actual coordinates of the test point. The mean of the localization errors over the test set is reported as the performance of a method in Fig. 7. Fig. 7A compares embodiments of the disclosed indoor localization system with indoor localization systems of the prior art, wherein 7A plots the localization error of each method in dependence on the annotation ratio in the training set of semi-supervised training.

An example of a method of the prior art is semi-supervised support vector regression (SVR) that employs hyper-parameters C and y. A second example of a method of the prior art is k-nearest neighbor regression (kNN), employing the hyper-parameter k. The optimal hyper-parameters were determined by a five-fold inner cross-validation searching $C \in \{1, 10, 10^2, 10^3\}$ for SVR, and $k \in \{1, 2, 3, 5, 10\}$ for kNN. The kNN method is optionally combined with a de-noising autoencoder (AU) applied to the signal strength values.

Fig. 7A further shows results of the localization error of the variational autoencoders proposed in this disclosure, where VAE-M1 refers to the first embodiment as explained above with reference to Fig. 1, VAE-M2 refers to the second embodiment explained above with reference to Fig. 2 above, and VAE1-SP, VAE2-SP refer to the first and second embodiments of the variational autoencoder, respectively, improved by the structured projection as explained above with reference to Fig. 5. As shown in Fig. 7A, all methods achieve a mean localization error of approximately 5 m in the fully supervised setting when the annotation data ratio is 100. The localization error employing the train/test split of the UJI indoor log data set for the methods tested is given in Table 1. The method VAE2-SP achieves the lowest mean localization error among the methods tested.

Table 1

| Method | SVR | KNN | AU-KNN | VAE-M1 | VAE-M2 | VAE1-SP | VAE2-SP |
| --- | --- | --- | --- | --- | --- | --- | --- |
| RMSE (m) | 5.41 | 5.98 | 5.47 | 5.32 | 5.21 | 4.73 | 4.65 |

However, as shown in Fig. 7A, when only 10% of the data is labeled, the methods of the prior art result in a localization error of at least 60 m, while the variational autoencoder of the first and second embodiments achieve a lower localization error. When the variational autoencoders are enhanced by the structured projection, localization error is approximately half of the prior art examples. Hence, the results displayed in Fig. 7A imply that all methods resist a modest annotation reduction reasonably well when 50% or more data are labeled. However, when a reduction becomes significant and considerably reduces the expensive collection of labeled data, the VAE-based methods disclosed resist better than the methods of the prior art and still achieve a reasonable prediction accuracy.

Fig. 7B shows the effect of reducing the fraction of labeled data in data. Fig. 7B displays the cumulative distribution function of the localization error for the predictor based on the VAE2-SP training. As shown in Fig. 7B, this predictor resist well to reduction of the annotation ratio to as low as 1-5%.

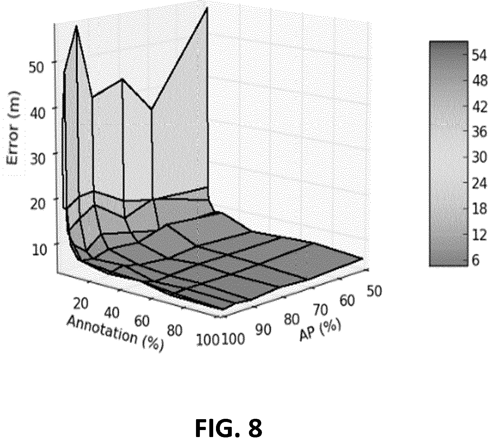

Fig. 8 relates to a further problem of indoor localization in real life settings where some of the Wi-Fi access points stop emitting their signals due to technical or business related issues. Fig. 8 plots the localization error in dependence on both the annotation fraction and the ratio of available Wi-Fi access points. The ratio of available Wi-Fi access points varies from 100%, when all Wi-Fi access points are available at test time, to 50%, when only half the Wi-Fi access points are available at test time. The results presented in Fig. 5 are obtained by retraining the model in the function of available Wi-Fi access points. The results of Fig. 8 relate to the embodiment employing the VAE2-SP model. In the case of available access points being 50%, the localization error is 5.12 m for fully labeled data and 6.43 m for an annotation fraction of 5%, which is an error comparable with the error measured when 100% of the access points are available, which are 5.65 m for fully labeled data and 6.12 m for an annotation fraction of 5%.

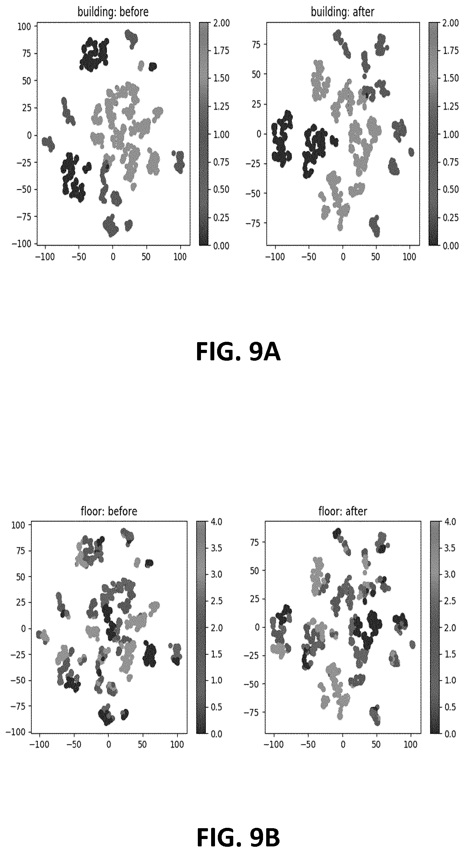

Fig. 9 shows a visualization of the VAE in the form of a t-distributed stochastic neighbor embedding (t-SNE) shown before VAE, i.e. applied to the input signal strength data X, in the left panel and after VAE, i.e. applied to the reconstructed signal strength data X', or X", respectively, in the right panel. The data points are gray according to the label produced by the classification neural network, a building attribute in Fig. 9A, or a floor attribute, in Fig. 9B. The results of Fig. 9 imply that data produced by the VAE have a better separability than the original data, which explains the high accuracy of the predictor under training with low annotation ratio.

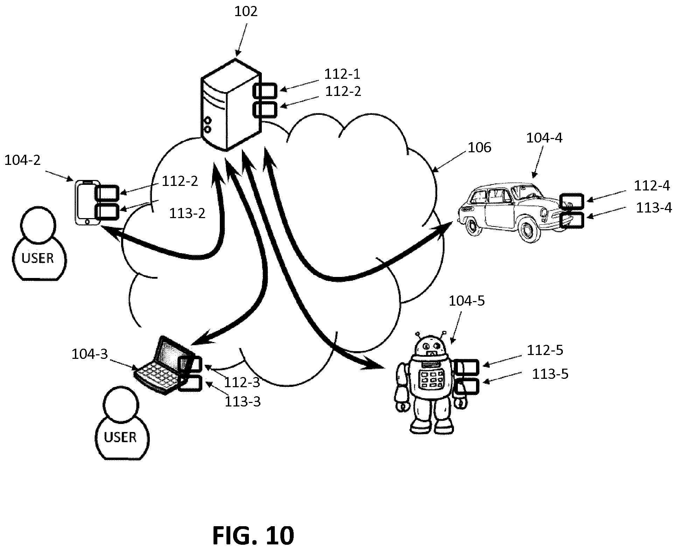

The above-mentioned systems, methods and embodiments may be implemented within an architecture such as illustrated in Fig. 10, which comprises server 102 and one or more client devices 104 that communicate over a network 106 (which may be wireless and/or wired) such as the Internet for data exchange. Server 102 and the client devices 104 each include a data processor 112 and memory 113 such as a hard disk. The client devices 104 may be any devices that communicate with server 102, including cell phone 104-2, computer 104-3, autonomous vehicle 104-4, or robot 104-5. More precisely in an embodiment, the system according to the embodiments of Figs. 1 and 2 may be implemented by server 102.

Server 102 may receive training data and train a predictor according to the embodiments of Figs. 1 and 3, or Figs. 2 and 4, and store the predictor in memory 113-1. For example, after the predictor has been trained, client device 104, located in an indoor environment, determines signal strength values received from wireless access points and provides the determined signal strength values over network 106 to server 102, which applies the trained predictor to the signal strength values to determine a predicted location of the client device 104, and may provide the predicted location to client device 104 over network 106. Alternatively, the predictor may be downloaded for offline use to the client devices 104.

Some or all of the method steps described above may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

Thus, the methods and systems disclosed herewith allow accurate indoor localization with reduced need for labeled data points, thereby reducing expense for training of the system data. Embodiments described are based on the realization that the latent space of variational autoencoders allows training of a classifier to high accuracy at low annotation ratios.

## Claims

1. A computer-implemented method of training a predictor to predict a location of a computing device in an indoor environment, the method comprising:

receiving training data relating to a strength of signals from wireless access points received at positions of an indoor environment, wherein the training data comprise a subset of labeled data ( $D_T^L$ ), comprising signal strength values ($x_i$) and location labels ($y_i$), and a subset of unlabeled data ( $D_T^U$ ), comprising only signal strength values ($x_i$); and

training a variational autoencoder (12) to minimize a reconstruction loss (J) of the signal strength values of the training data, wherein the variational autoencoder comprises encoder neural networks (122), which encode the signal strength values ($x_i$) in a latent variable ($z_i$), and decoder neural networks, which decode the latent variable ($z_i$) to reconstructed signal strength values ($x'_i$) for computing the reconstruction loss (J);

training a neural network (16) to minimize a prediction loss (Err) on the labeled data ( $D_T^L$ ), wherein the neural network (16) employs the latent variable ($z_i$) to generate a predicted location ($y'_i$),

wherein the encoder neural networks (122) and the neural network (16) form the predictor for the location of a computing device in the indoor environment,

wherein the prediction labels ($y'_i$) are multivariate data values indicating a location coordinate, and the prediction loss (Err) is a regression loss.

2. A computer-implemented method of training a predictor to predict a location of a computing device in an indoor environment, the method comprising:

receiving training data relating to a strength of signals from wireless access points received at positions of an indoor environment, wherein the training data comprise a subset of labeled data ( $D_T^L$ ), comprising signal strength values ($x_i$) and location labels ($y_i$), and a subset of unlabeled data ( $D_T^U$ ), comprising only signal strength values ($x_i$); and

training a neural network (26) together with a variational autoencoder (22), wherein the neural network (26) receives signal strength values ($x_i$) of the training data as input and outputs a predicted location ($y'_i$) to decoder neural networks (224) of the variational autoencoder (22),

wherein training the neural network (26) together with the variational autoencoder (22) is based on minimizing a reconstruction loss (J) and a prediction loss (Err), the reconstruction loss (J) being calculated between the signal strength values ($x_i$) of the training data and reconstructed signal strength values ($x_i''$), and the prediction loss (Err) being calculated between the predicted location ($y'_i$) and the location labels ($y_i$) for the subset of labelled data of the training data,

wherein the neural network (26) forms the predictor for the location of a computing device in the indoor environment.

3. The method of claim 2, wherein outputting the predicted location ($y'_i$) to the decoder neural networks (224) of the variational autoencoder (22) comprises outputting the predicted location ($y'_i$) as a categorical latent variable to the decoder neural networks (224), wherein the variational autoencoder (22) comprises encoder neural networks (222) which encode the signal strength values ($x_i$) in a continuous latent variable ($z_i$), and wherein the decoder neural networks (124) decode the categorical latent variable ($y'_i$) and the continuous latent variable ($z_i$) to reconstructed signal strength values ($x_i''$).

4. The method of claim 3, wherein minimizing the reconstruction loss and the prediction loss comprises determining gradients of a sum of a first term and a second term with respect to first hidden states of the encoder neural networks (222), with respect to second hidden states of the decoder neural networks (224), and with respect to third hidden states of the neural network (26), wherein the first term measures the reconstruction loss (J) for the training data, and the second term measures the prediction loss (Err) for the subset of labelled data ( $D_T^L$ ).

5. The method of one of claims 1, 3, or 4, wherein the encoder neural networks comprise an encoder neural network for the X coordinate, an encoder neural network for the Y coordinate, and an encoder neural network for the Z coordinate, and the decoder neural networks comprise corresponding decoder networks, wherein training the autoencoder comprises training each encoder-decoder pair for a coordinate independent of the encoder-decoder pairs for the other coordinates.

6. The method of claim 5, wherein the outputs of the encoder neural network for the X coordinate, the encoder neural network for the Y coordinate, and the encoder neural network for the Z coordinate are concatenated to form the latent variable ($z_i$).

7.  A predictor for predicting a location of a computing device in an indoor environment from signal strength values ($x_i$), the predictor being implemented by one or more computers, the predictor comprising:

    encoder neural networks (122) configured to encode the signal strength values ($x_i$) in a latent variable ($z_i$);
    a neural network (16) configured to employ the latent variable ($z_i$) to generate a predicted location ($y'_i$) for the location of the computing device,
    wherein the predictor has been trained according to the method of claim 1.

8.  A predictor for predicting a location of a computing device in an indoor environment from signal strength values ($x_i$), the predictor being implemented by one or more computers, the predictor comprising:

    a neural network (26), configured to generate a predicted location ($y'_i$) from the signal strength values ($x_i$),
    wherein the predictor has been trained according to the method of claim 2.

9.  The predictor of claim 8, wherein, during training of the neural network (26) together with the variational autoencoder (22), the predicted location ($y'_i$) is a categorical latent variable of the variational autoencoder (22).

10. The predictor of claim 8, wherein minimizing the reconstruction loss (J) and the prediction loss (Err) comprises determining gradients of a sum of a first term and a second term with respect to first hidden states of encoder neural networks (222) of the variational autoencoder (22), with respect to second hidden states of the decoder neural networks (224), and with respect to third hidden states of the neural network, wherein the first term measures the reconstruction loss (J), and the second term measures the prediction loss (Err).

11. The predictor of claim 7 or claim 10, wherein the encoder neural networks comprise an encoder neural network for the X coordinate, an encoder neural network for the Y coordinate, and an encoder neural network for the Z coordinate, and the decoder neural network comprises corresponding decoder networks, wherein each encoder-decoder pair for a coordinate is configured to be trained independent of the encoder-decoder pairs for the other coordinates.

12. The predictor of one of claims 7 to 11, further comprising a projection component 28 configured to apply a weighted neighborhood projection to the absolute coordinate indicated by the multivariate data value of the prediction labels y, wherein the weighted neighborhood projection is configured to employ a number of nearest neighbor nodes from the subset of labelled nodes.

13. The predictor of claim 12, wherein the number of nearest neighbor nodes is 2.

14. A computer-readable storage medium having computer-executable instructions stored thereon, which, when executed by one or more processors perform the method of one of claims 1 to 6.

15. A computer-readable storage medium having computer-executable instructions stored thereon, which, when executed by one or more processors provide the predictor according to one of claims 7 to 13, wherein the predictor of claim 7 has been trained according to the method of claim 1, the predictor of claim 8 has been trained according to the method of claim 2.

**Patentansprüche**

1.  Computerimplementiertes Verfahren zum Trainieren eines Prädiktors zur Vorhersage eines Standorts einer Computervorrichtung in einer Innenraumumgebung, wobei das Verfahren Folgendes umfasst:

    Empfangen von Trainingsdaten, die sich auf eine Stärke von Signalen von drahtlosen Zugangspunkten beziehen, die an Positionen in einer Innenraumumgebung empfangen werden, wobei die Trainingsdaten eine Teilmenge von gekennzeichneten Daten $\left( D\frac{L}{T} \right)$, umfassend Signalstärkewerte ($x_i$) und Standortkennzeichnun-

    gen ($y_i$), und eine Teilmenge von nicht gekennzeichneten Daten ( $D\frac{U}{T}$ ), umfassend nur Signalstärkewerte ($x_i$),

    umfassen; und
    Trainieren eines Variations-Autocodierers (12), um einen Rekonstruktionsverlust (J) der Signalstärkewerte der Trainingsdaten zu minimieren, wobei der Variations-Autocodierer neuronale Codierer-Netzwerke (122) umfasst,

die die Signalstärkewerte ($x_i$) in einer latenten Variablen ($z_i$) codieren, und neuronale Decodierer-Netzwerke, die die latente Variable ($z_i$) zu rekonstruierten Signalstärkewerten ($x'_i$) decodieren, um den Rekonstruktionsverlust (J) zu berechnen;

Trainieren eines neuronalen Netzwerks (16), um einen Vorhersageverlust (Err) auf den gekennzeichneten Daten ( $D\frac{L}{T}$ ) zu minimieren, wobei das neuronale Netzwerk (16) die latente Variable ($z_i$) verwendet, um einen vorhergesagten Standort ($y'_i$) zu erzeugen,

wobei die neuronalen Codierer-Netzwerke (122) und das neuronale Netzwerk (16) den Prädiktor für den Standort einer Computervorrichtung in der Innenraumumgebung bilden,

wobei die Vorhersagekennzeichnungen ($y'_i$) multivariate Datenwerte sind, die eine Standortkoordinate angeben, und der Vorhersageverlust (Err) ein Regressionsverlust ist.

2. Computerimplementiertes Verfahren zum Trainieren eines Prädiktors zur Vorhersage eines Standorts einer Computervorrichtung in einer Innenraumumgebung, wobei das Verfahren Folgendes umfasst:

Empfangen von Trainingsdaten, die sich auf eine Stärke von Signalen von drahtlosen Zugangspunkten beziehen, die an Positionen in einer Innenraumumgebung empfangen werden, wobei die Trainingsdaten eine Teilmenge von gekennzeichneten Daten ( $D\frac{L}{T}$ ), umfassend Signalstärkewerte ($x_i$) und Standortkennzeichnungen ($y_i$), und eine Teilmenge von nicht gekennzeichneten Daten ( $D\frac{U}{T}$ ), umfassend nur Signalstärkewerte ($x_i$), umfassen; und

Trainieren eines neuronalen Netzwerks (26) zusammen mit einem Variations-Autocodierer (22), wobei das neuronale Netzwerk (26) Signalstärkewerte ($x_i$) der Trainingsdaten als Eingabe empfängt und einen vorhergesagten Standort ($y'_i$) an neuronale Decodierer-Netzwerke (224) des Variations-Autocodierers (22) ausgibt, wobei das Trainieren des neuronalen Netzwerks (26) zusammen mit dem Variations-Autocodierer (22) auf dem Minimieren eines Rekonstruktionsverlustes (J) und eines Vorhersageverlustes (Err) basiert, wobei der Rekonstruktionsverlust (J) zwischen den Signalstärkewerten ($x_i$) der Trainingsdaten und rekonstruierten Signalstärkewerten ($x_i''$) berechnet wird, und der Vorhersageverlust (Err) zwischen dem vorhergesagten Standort ($y'_i$) und den Standortkennzeichnungen ($y_i$) für die Teilmenge der gekennzeichneten Daten der Trainingsdaten, berechnet wird, wobei das neuronale Netzwerk (26) den Prädiktor für den Standort einer Computervorrichtung in der Innenraumumgebung bildet.

3. Verfahren nach Anspruch 2, wobei das Ausgeben des vorhergesagten Standortes ($y'_i$) an die neuronalen Decodierer-Netzwerke (224) des Variations-Autocodierers (22) das Ausgeben des vorhergesagten Standortes ($y'_i$) als eine kategorische latente Variable an die neuronalen Decodierer-Netzwerke (224) umfasst, wobei der Variations-Autocodierer (22) neuronale Codierer-Netzwerke (222) umfasst, die die Signalstärkewerte ($x_i$) in einer kontinuierlichen latenten Variablen ($z_i$) codieren, und wobei die neuronalen Decodierer-Netzwerke (124) die kategoriale latente Variable ($y'_i$) und die kontinuierliche **latente Variable** ($z_i$) zu rekonstruierten Signalstärkewerten ($x_i''$) decodieren.

4. Verfahren nach Anspruch 3, wobei das Minimieren des Rekonstruktionsverlustes und des Vorhersageverlustes das Bestimmen von Gradienten einer Summe eines ersten Terms und eines zweiten Terms in Bezug auf erste versteckte Zustände der neuronalen Codierer-Netzwerke (222), in Bezug auf zweite versteckte Zustände der neuronalen Decodierer-Netzwerke (224) und in Bezug auf dritte verborgene Zustände des neuronalen Netzwerks (26) umfasst, wobei der erste Term den Rekonstruktionsverlust (J) für die Trainingsdaten misst und der zweite Term den Vorhersageverlust (Err) für die Teilmenge der gekennzeichneten Daten ( $D\frac{L}{T}$ ) misst.

5. Verfahren nach einem der Ansprüche 1, 3 oder 4, wobei die neuronalen Codierer-Netzwerke ein neuronales Codierer-Netzwerk für die X-Koordinate, ein neuronales Codierer-Netzwerk für die Y-Koordinate und ein neuronales Codierer-Netzwerk für die Z-Koordinate umfassen, und die neuronalen Decodierer-Netzwerke entsprechende Decodierer-Netzwerke umfassen, wobei das Trainieren des Autocodierers das Trainieren jedes Codierer-Decodierer-Paares für eine Koordinate unabhängig von den Codierer-Decodierer-Paaren für die anderen Koordinaten umfasst.

6. Verfahren nach Anspruch 5, wobei die Ausgaben des neuronalen Codierer-Netzwerks für die X-Koordinate, des neuronalen Codierer-Netzwerks für die Y-Koordinate und des neuronalen Codierer-Netzwerks für die Z-Koordinate verkettet werden, um die latente Variable ($z_i$) zu bilden.

7. Prädiktor zum Vorhersagen eines Standorts einer Computervorrichtung in einer Innenraumumgebung aus Signalstärkewerten ($x_i$), wobei der Prädiktor durch einen oder mehrere Computer implementiert ist, wobei der Prädiktor umfasst:

neuronale Codierer-Netzwerke (122), die dazu konfiguriert sind, die Signalstärkewerte ($x_i$) in einer latenten Variablen ($z_i$) zu codieren;
ein neuronales Netzwerk (16), das dazu konfiguriert ist, die latente Variable ($z_i$) einzusetzen, um einen vorhergesagten Standort ($y'_i$) für den Standort der Computervorrichtung zu erzeugen,
wobei der Prädiktor gemäß dem Verfahren nach Anspruch 1 trainiert worden ist.

8. Prädiktor zum Vorhersagen eines Standorts einer Computervorrichtung in einer Innenraumumgebung aus Signalstärkewerten ($x_i$), wobei der Prädiktor durch einen oder mehrere Computer implementiert wird, wobei der Prädiktor Folgendes umfasst:

ein neuronales Netzwerk (26), das dazu konfiguriert ist, einen vorhergesagten Standort ($y'_i$) aus den Signalstärkewerten ($x_i$) zu erzeugen,
wobei der Prädiktor gemäß dem Verfahren nach Anspruch 2 trainiert worden ist.

9. Prädiktor nach Anspruch 8, wobei während des Trainings des neuronalen Netzwerks (26) zusammen mit dem Variations-Autocodierer (22) der vorhergesagte Standort ($y'_i$) eine kategorische latente Variable des Variations-Autocodierers (22) ist.

10. Prädiktor nach Anspruch 8, wobei das Minimieren des Rekonstruktionsverlustes (J) und des Vorhersageverlustes (Err) das Bestimmen von Gradienten einer Summe eines ersten Terms und eines zweiten Terms in Bezug auf erste versteckte Zustände von neuronalen Codierer-Netzwerken (222) des Variations-Autocodierers (22), in Bezug auf zweite versteckte Zustände der neuronalen Decodierer-Netzwerke (224) und in Bezug auf dritte verborgene Zustände des neuronalen Netzwerks umfasst, wobei der erste Term den Rekonstruktionsverlust (J) misst und der zweite Term den Vorhersageverlust (Err) misst.

11. Prädiktor nach Anspruch 7 oder Anspruch 10, wobei die neuronalen Codierer-Netzwerke ein neuronales Codierer-Netzwerk für die X-Koordinate, ein neuronales Codierer-Netzwerk für die Y-Koordinate und ein neuronales Codierer-Netzwerk für die Z-Koordinate umfassen, und das neuronale Decodierer-Netzwerk entsprechende Decodierer-Netzwerke umfasst, wobei jedes Codierer-Decodierer-Paar für eine Koordinate dazu konfiguriert ist, unabhängig von den Codierer-Decodierer-Paaren für die anderen Koordinaten trainiert zu werden.

12. Prädiktor nach einem der Ansprüche 7 bis 11, des Weiteren umfassend eine Projektionskomponente 28, die dazu konfiguriert ist, eine gewichtete Nachbarschaftsprojektion auf die absolute Koordinate anzuwenden, die durch den multivariaten Datenwert der Vorhersagekennzeichnungen y angegeben wird, wobei die gewichtete Nachbarschaftsprojektion dazu konfiguriert ist, eine Anzahl von nächsten Nachbarknoten aus der Teilmenge von gekennzeichneten Knoten zu verwenden.

13. Prädiktor nach Anspruch 12, wobei die Anzahl der nächsten Nachbarknoten 2 beträgt.

14. Computerlesbares Speichermedium mit darauf gespeicherten computerausführbaren Anweisungen, die, wenn sie von einem oder mehreren Prozessoren ausgeführt werden, das Verfahren nach einem der Ansprüche 1 bis 6 durchführen.

15. Computerlesbares Speichermedium mit darauf gespeicherten computerausführbaren Anweisungen, die, wenn sie von einem oder mehreren Prozessoren ausgeführt werden, den Prädiktor gemäß einem der Ansprüche 7 bis 13 bereitstellen, wobei der Prädiktor nach Anspruch 7 gemäß dem Verfahren nach Anspruch 1 trainiert worden ist, der Prädiktor nach Anspruch 8 gemäß dem Verfahren nach Anspruch 2 trainiert worden ist.

**Revendications**

1. Procédé implémenté par un ordinateur pour entraîner un prédicteur à prédire l'emplacement d'un dispositif informatique dans un environnement intérieur, le procédé comprenant :

la réception de données d'entraînement relatives à l'intensité de signaux provenant de points d'accès sans fil reçus à des positions d'un environnement intérieur, dans lequel les données d'entraînement comprennent un sous-ensemble de données étiquetées ($D_T^L$), comprenant des valeurs d'intensité de signal ($x_i$) et des étiquettes d'emplacement ($y_i$), et un sous-ensemble de données non étiquetées ($D_T^U$), comprenant uniquement des valeurs d'intensité de signal ($x_i$) ; et

l'entraînement d'un auto-encodeur variationnel (12) pour minimiser une perte de reconstruction ($J$) des valeurs d'intensité de signal des données d'entraînement, dans lequel l'auto-encodeur variationnel comprend des réseaux neuronaux d'encodeur (122), qui codent les valeurs d'intensité de signal ($x_i$) dans une variable latente ($z_i$), et des réseaux neuronaux de décodeur, qui décodent la variable latente ($z_i$) en valeurs d'intensité de signal reconstruites ($x'_i$) pour calculer la perte de reconstruction ($J$) ;

la formation d'un réseau neuronal (16) pour minimiser une perte de prédiction (Err) sur les données étiquetées ($D_T^L$), dans lequel le réseau neuronal (16) emploie la variable latente ($z_i$) pour générer un emplacement prédit ($y'_i$),

dans lequel les réseaux neuronaux d'encodeur (122) et le réseau neuronal (16) forment le prédicteur pour l'emplacement d'un dispositif informatique dans l'environnement intérieur,

dans lequel les étiquettes de prédiction ($y'_i$) sont des valeurs de données multivariées indiquant une coordonnée d'emplacement, et la perte de prédiction (Err) est une perte de régression.

2. Procédé implémenté par un ordinateur pour entraîner un prédicteur à prédire l'emplacement d'un dispositif informatique dans un environnement intérieur, le procédé comprenant :

la réception de données d'entraînement relatives à l'intensité de signaux provenant de points d'accès sans fil reçus à des positions d'un environnement intérieur, dans lequel les données d'entraînement comprennent un sous-ensemble de données étiquetées ($D_T^L$) comprenant des valeurs d'intensité de signal ($x_i$) et des étiquettes d'emplacement ($y_i$), et un sous-ensemble de données non étiquetées ($D_T^U$), comprenant uniquement des valeurs d'intensité de signal ($x_i$) ; et

l'entraînement d'un réseau neuronal (26) conjointement à un auto-encodeur variationnel (22), dans lequel le réseau neuronal (26) reçoit en entrée des valeurs d'intensité de signal ($x_i$) des données d'entraînement et envoie en sortie un emplacement prédit ($y'_i$) aux réseaux neuronaux de décodeur (224) de l'auto-encodeur variationnel (22),

dans lequel l'entraînement du réseau neuronal (26) conjointement à l'auto-encodeur variationnel (22) est basé sur la minimisation d'une perte de reconstruction ($J$) et d'une perte de prédiction (Err), la perte de reconstruction ($J$) étant calculée entre les valeurs d'intensité de signal ($x_i$) des données d'entraînement et les valeurs d'intensité de signal reconstruites ($x''_i$), et la perte de prédiction (Err) étant calculée entre l'emplacement prédit ($y'_i$) et les étiquettes d'emplacement ($y_i$) pour le sous-ensemble de données étiquetées des données d'entraînement,

dans lequel le réseau neuronal (26) forme le prédicteur pour l'emplacement d'un dispositif informatique dans l'environnement intérieur.

3. Procédé selon la revendication 2, dans lequel l'envoi en sortie de l'emplacement prédit ($y'_i$) aux réseaux neuronaux de décodeur (224) de l'auto-encodeur variationnel (22) comprend l'envoi en sortie de l'emplacement prédit ($y'_i$) sous forme d'une variable latente catégorielle aux réseaux neuronaux de décodeur (224), dans lequel l'auto-encodeur variationnel (22) comprend des réseaux neuronaux d'encodeur (222) qui codent les valeurs d'intensité de signal ($x_i$) dans une variable latente continue ($z_i$), et dans lequel les réseaux neuronaux de décodeur (124) décodent la variable latente catégorielle ($y'_i$) et la variable latente continue ($z_i$) en valeurs d'intensité de signal reconstruites ($x''_i$).

4. Procédé selon la revendication 3, dans lequel la minimisation de la perte de reconstruction et de la perte de prédiction comprend la détermination de gradients de la somme d'un premier terme et d'un deuxième terme par rapport à des premiers états cachés des réseaux neuronaux d'encodeur (222), par rapport à des deuxièmes états cachés des réseaux neuronaux de décodeur (224), et par rapport à des troisièmes états cachés du réseau neuronal (26), dans lequel le premier terme mesure la perte de reconstruction ($J$) pour les données d'entraînement et le deuxième terme mesure la perte de prédiction (Err) pour le sous-ensemble de données étiquetées ($D_T^L$).

**5.** Procédé selon l'une des revendications 1, 3 ou 4,

dans lequel les réseaux neuronaux d'encodeur comprennent un réseau neuronal d'encodeur pour la coordonnée X, un réseau neuronal d'encodeur pour la coordonnée Y et un réseau neuronal d'encodeur pour la coordonnée Z, et les réseaux neuronaux de décodeur comprennent des réseaux de décodeur correspondants, dans lequel l'entraînement de l'auto-encodeur comprend l'entraînement de chaque paire encodeur-décodeur pour une coordonnée indépendante des paires encodeur-décodeur pour les autres coordonnées.

**6.** Procédé selon la revendication 5, dans lequel les envois en sortie du réseau neuronal d'encodeur pour la coordonnée X, pour la coordonnée Y et pour la coordonnée Z sont concaténés pour former la variable latente ($z_i$).

**7.** Prédicteur permettant de prédire l'emplacement d'un dispositif informatique dans un environnement intérieur à partir de valeurs d'intensité de signal ($x_i$), le prédicteur étant implémenté par un ou plusieurs ordinateurs, le prédicteur comprenant :

des réseaux neuronaux d'encodeur (122) configurés pour coder les valeurs d'intensité de signal ($x_i$) dans une variable latente ($z_i$) ; un réseau neuronal (16) configuré pour employer la variable latente ($z_i$) afin de générer un emplacement prédit ($y'_i$) pour l'emplacement du dispositif informatique, dans lequel le prédicteur a été entraîné selon le procédé de la revendication 1.

**8.** Prédicteur permettant de prédire l'emplacement d'un dispositif informatique dans un environnement intérieur à partir de valeurs d'intensité de signal ($x_i$), le prédicteur étant implémenté par un ou plusieurs ordinateurs, le prédicteur comprenant :

un réseau neuronal (26), configuré pour générer un emplacement prédit ($y'_i$) à partir des valeurs d'intensité de signal ($x_i$), dans lequel le prédicteur a été entraîné selon le procédé de la revendication 2.

**9.** Prédicteur selon la revendication 8, dans lequel, pendant l'entraînement du réseau neuronal (26) conjointement à l'auto-encodeur variationnel (22), l'emplacement prédit ($y'_i$) est une variable latente catégorielle de l'auto-encodeur variationnel (22).

**10.** Prédicteur selon la revendication 8, dans lequel la minimisation de la perte de reconstruction ($J$) et de la perte de prédiction (Err) comprend la détermination de gradients d'une somme d'un premier terme et d'un deuxième terme par rapport à des premiers états cachés de réseaux neuronaux d'encodeur (222) de l'auto-encodeur variationnel (22), par rapport à des deuxièmes états cachés des réseaux neuronaux de décodeur (224), et par rapport à des troisièmes états cachés du réseau neuronal, dans lequel le premier terme mesure la perte de reconstruction ($J$) et le deuxième terme mesure la perte de prédiction (Err).

**11.** Prédicteur selon la revendication 7 ou la revendication 10, dans lequel les réseaux neuronaux d'encodeur comprennent un réseau neuronal d'encodeur pour la coordonnée X, un réseau neuronal d'encodeur pour la coordonnée Y et un réseau neuronal d'encodeur pour la coordonnée Z, et le réseau neuronal de décodeur comprend des réseaux neuronaux de décodeur correspondants, dans lequel chaque paire encodeur-décodeur pour une coordonnée est configurée pour être entraînée indépendamment des paires encodeur-décodeur pour les autres coordonnées.

**12.** Prédicteur selon l'une des revendications 7 à 11, comprenant en outre un composant de projection 28 configuré pour appliquer une projection de voisinage pondérée à la coordonnée absolue indiquée par la valeur de données multivariées des étiquettes de prédiction ($y$), dans lequel la projection de voisinage pondérée est configurée pour employer un certain nombre de nœuds voisins les plus proches à partir du sous-ensemble de nœuds étiquetés.

**13.** Prédicteur selon la revendication 12, dans lequel le nombre de nœuds voisins les plus proches est de 2.

**14.** Support de stockage lisible par un ordinateur sur lequel sont stockées des instructions exécutables par un ordinateur qui, quand elles sont exécutées par un ou plusieurs processeurs, exécutent le procédé selon l'une des revendications 1 à 6.

**15.** Support de stockage lisible par un ordinateur sur lequel sont stockées des instructions exécutables par un ordinateur,

qui, quand elles sont exécutées par un ou plusieurs processeurs, fournissent le prédicteur selon l'une des revendications 7 à 13, dans lequel le prédicteur de la revendication 7 a été entraîné selon le procédé de la revendication 1, et le prédicteur de la revendication 8 a été entraîné selon le procédé de la revendication 2.

<u>100</u>

# FIG. 1

**FIG. 2**

300

receiving training data $D_T^L, D_T^U$

32

training variational autoencoder

34

training classification neural network

36

# FIG. 3

400

receiving training data $D_T^L, D_T^U$

42

training variational autoencoder and classification neural network

44

# FIG. 4

**FIG. 5**

**FIG. 6A**

**FIG. 6B**

FIG. 6C

FIG. 7A

FIG. 7B

FIG. 8

**FIG. 9A**

**FIG. 9B**

**FIG. 10**

EP 3 798 918 B1

**REFERENCES CITED IN THE DESCRIPTION**

**Non-patent literature cited in the description**

- **MOK** ; **RETSCHER**. Location determination using Wi-Fi fingerprinting versus Wi-Fi trilateration. *Journal of Location Based Services*, 2007, vol. 1 (2), 145-157
- **PULKKINEN** ; **ROOS** ; **MYLLYMÄKI**. Semi-supervised learning for WLAN Positioning. *Artificial Neural Networks and Machine Learning - ICANN 2011 - 21st International Conference on Artificial Neural Networks*, 2011, 355-263
- Semisupervised Deep Reinforcement Learning in Support of IoT and Smart City Services. **MOHAMMADI MEHDI et al.** IEEE Internet of Things Journal. IEEE, 01 April 2018, vol. 5, 624-635